Europäisches Patentamt

European Patent Office

Office européen des brevets

(19)

(11) Veröffentlichungsnummer : **0 338 039 B1**

(12) # EUROPÄISCHE PATENTSCHRIFT

(51) Int. Cl.⁵ : **E02D 31/00, B09B 1/00, C04B 18/04**

(45) Veröffentlichungstag der Patentschrift :
**02.12.92 Patentblatt 92/49**

(21) Anmeldenummer : **88908177.4**

(22) Anmeldetag : **22.08.88**

(86) Internationale Anmeldenummer :
**PCT/EP88/00747**

(87) Internationale Veröffentlichungsnummer :
**WO 89/01547 23.02.89 Gazette 89/05**

(54) **VERFAHREN ZUM ABDICHTEN VON BODENFORMATIONEN, INSBESONDERE ZUR HERSTELLUNG VON DEPONIEN.**

(30) Priorität : **20.08.87 DE 3727819**
**21.08.87 DE 3727978**

(43) Veröffentlichungstag der Anmeldung :
**25.10.89 Patentblatt 89/43**

(45) Bekanntmachung des Hinweises auf die
Patenterteilung :
**02.12.92 Patentblatt 92/49**

(84) Benannte Vertragsstaaten :
**AT BE CH DE FR GB IT LI LU NL SE**

(56) Entgegenhaltungen :
**EP-A- 0 125 680**
**WO-A-82/01331**
**DE-A- 2 708 515**
**GB-A- 2 090 301**
**US-A- 4 028 130**
**US-A- 4 539 121**

(73) Patentinhaber : **Kügler, Jost-Ulrich**
**An der Altenburg 15**
**W-4300 Essen-Werden (DE)**

(72) Erfinder : **Kügler, Jost-Ulrich**
**An der Altenburg 15**
**W-4300 Essen-Werden (DE)**

(74) Vertreter : **Dost, Wolfgang, Dr. rer. nat.**
**Dipl.-Chem.**
**Patent- u. Rechtsanwälte Bardehle,**
**Pagenberg, Dost, Altenburg Frohwitter &**
**Partner Galileiplatz 1**
**W-8000 München 80 (DE)**

EP 0 338 039 B1

**Beschreibung**

Aus der EP-B-125 680 ist ein Verfahren zum Abdichten einer unter der Bodenoberfläche liegenden Bodenschicht aus Sand oder Kiessand gegen Wasser bekannt, bei dem aus Abwasserkläranlagen gewonnener Klärschlamm, der durch Wasserentzug in pastöse bzw. knetbare Form gebracht worden ist, der Bodenschicht in einem Gewichtsverhältnis von etwa 10 bis 30 %, bezogen auf das Trockengewicht der Bodenschicht beigemischt wird, und anschließend mechanische Verdichtung erfolgt. Ein besonderer Aspekt dieses Verfahrens zur Abdichtung von Sand- oder Kiessandschichten gegen Wasser besteht in der Kultivierung und Bewässerung des über der abgedichteten Bodenschicht liegenden Bodens, wodurch in Wüstengebieten in wirtschaftlicher Weise überhaupt erst dauerhafte Bepflanzungen ermöglicht werden.

Bei den Verfahren der EP-B-125 680 werden die Abdichtungseigenschaften nach dem Prinzip natürlicher Abdichtungsböden, wie Lehm oder Ton, erreicht, d.h. die Abdichtungsschicht behält ihre plastischen Eigenschaften auf Dauer bei, so daß die Abdichtungsschicht bei Bodenverformungen in gewissem Umfang Spannungen ohne Reißen der Dichtungsschicht aufnehmen kann. Letzteres ist bei einer Aushärtung von Massen, insbesondere unter Verwendung hydraulischer Bindemittel, nicht der Fall, weshalb derartige Systeme zur Erzielung einer dauerhaften Abdichtungsschicht ungeeignet sind. Ein derartiges Verfahren zur Herstellung härtbarer Massen für die Landverfüllung oder zur Herstellung eines Straßenunterbaus ist aus der US-A-4-028 138 bekannt, die härtbare Massen aus Klärschamm, Kalk und Flugasche beschreibt.

Auch die WO 82/01331 beschreibt härtbare Massen aus Braunkohlenasche und z.B. Dünnsäure aus der Titandioxid-Herstellung oder verbrauchten Eisenoxidkatalysatoren, bei denen infolge chemischer Umsetzungen nach kurzer Zeit Zementierung unter Bildung eines harten Materials stattfindet, das u.a. zum Abdichten von Abfalldeponien eingesetzt werden soll.

In der US-A-4 539 121 ist ein Verfahren zur Beseitigung von Gewässerschlamm beschrieben, wobei der Schlamm zunächst teilentwässert und dann mit sehr fein gemahlener, granulierter Hochofenschlacke (Hüttensand) und vorzugsweise noch mit Kalk versetzt wird. Die härtbaren Massen werden zur Landverfüllung verwendet. Hierbei nimmt die US-A-4 539 121 ausdrücklich Bezug auf die US-A-3 920 595 und 4 015 997, in denen die hydraulischen Eigenschaften von sehr fein gemahlener granulierter Hochofenschlacke (Hüttensand), insbesondere ihr Einfluß auf eine sehr frühzeitige Härtung des Gemisches beschrieben sind.

Mit dem aus der EP-B-125 680 beschriebenen Verfahren lassen sich für viele Zwecke ausreichende Durchlässigkeitsbeiwerte erzielen, wobei insbesondere für Kultivierungszwecke eine stärkere Abdichtungswirkung mit kleineren Durchlässigkeitsbeiwerten nicht erforderlich ist. Anders liegt der Fall bei Deponien, wobei die durch die Abdichtung erzielten Durchlässigkeitsbeiwerte zunehmend verschärft wurden.

Darüber hinaus treten in letzter Zeit erhebliche Probleme bei der Beseitigung von Gewässerschlamm auf. So fallen z. B. bei der Entschlammung der Häfen jährlich große Mengen Gewässerschlamm an, die häufig mit Schwermetallen durchsetzt sind und beseitigt werden müssen. Hierbei wird der Gewässerschlamm, gegebenenfalls nach Anwendung von Flockungsmitteln, mittels Siebbandpressen zu einer weichplastischen Masse teilgetrocknet, deren Wassergehalt bezogen auf Trockenstoffe bei 55 - 80 % liegt. Dieses Abfallmaterial muß nach Maßgabe des Schadstoffgehaltes überwiegend auf abgedichteten Deponien gelagert werden. Die Gewässerschlämme sind überwiegend in die Deponieklasse 2, zum Teil in die Deponieklasse 3 einzustufen. Solche Deponien müssen zum Schutz von Boden und Grundwasser eine spezielle Abdichtung erhalten. Zur Erreichung der Deponieeigenschaften muß die natürliche Bodenformation der geplanten Deponie mittels besonderer Verfahren abgedichtet werden, wobei die durch die Abdichtung erzielten Durchlässigkeitswerte zunehmend verschärft wurden. Eine Entsorgung des Schlammes auf abgedichteten Deponien ist in zweierlei Hinsicht kostenaufwendig:

1. Die weiche Schlammasse ist ohne Zusätze nicht deponiefähig mangels Standsicherheit und Tragfähigkeit;

2. Die großen Schlammengen benötigen größeren teueren Deponieraum der für andere Deponiegüter verlorengeht. Dieses ist von besonderem Interesse, da neuer Deponieraum in Zukunft nur noch begrenzt zur Verfügung steht.

Eine Entsorgung durch Verbrennung oder Ablagerung auf abgedichteten Deponien ist deshalb kostenaufwendig. Hieraus ergibt sich unmittelbar das Bedürfnis nach anderen Entsorgungsarten für Gewässerschlämme.

Es wurde nun gefunden, daß sich wesentlich bessere Durchlässigkeitsbeiwerte erreichen lassen, wenn man Klärschlamm oder Gewässerschlamm zunächst mit einem Zuschlagstoff vermischt, dieses Gemisch auf die abzudichtende Bodenformation aufbringt und dann mechanisch verdichtet.

Gegenstand der Erfindung ist somit ein Verfahren zum Abdichten von Bodenformationen, insbesondere zur Basisabdichtung von Deponien oder Abkapselung von Altlasten oder Deponien nach dem Prinzip natürlicher Abdichtungsböden, wie Lehm oder Ton, unter Verwendung von Schlamm, das dadurch gekennzeichnet ist, daß man Klärschlamm oder Gewässerschlamm mit 30 - 70 Gewichtsprozent, bezogen auf Schlammtrockengewicht, wasseraufnahmefähigen, kornbeständigen Zuschlagstoff vermischt, das erhaltene Gemisch auf die Bodenformation aufbringt und mechanisch verdichtet.

Klärschlamm bildet ein praktisch überall anfallendes Abfallprodukt, das durch das erfindungsgemäße Verfahren in vorteilhafter Weise nutzbringend verwendet werden kann. Es steht auch preisgünstig zur Verfügung, da es normalerweise unter Aufwendung von Kosten abgelagert werden muß. Hierzu werden die in den Kläranlagen anfallenden Klärschlämme zuvor einer Teiltrocknung unterworfen.

Nach dem Verfahren der Erfindung kann der Gewässerschlamm selbst zur Herstellung abgedichteter Deponien verwendet werden, wodurch der Gewässerschlamm einerseits entsorgt und andererseits gleichzeitig kostbarer Deponieraum geschaffen wird. Der Gewässerschlamm erhält durch nachstehend beschriebene Aufbereitung Abdichtungseigenschaften wie natürliche Abdichtungsböden (Lehm und Ton) und kann anstelle der Entsorgung als Baustoff für Basis- oder Oberflächenabdichtung von Altdeponien und Auffangbecken von kontaminierten Wässern verwendet werden.

Der Wassergehalt der in den Kläranlagen anfallenden teilgetrockneten Schlämme liegt üblicherweise bei 50 - 80 Gewichtsprozent bezogen auf Schlammtrockenstoffe. Dieses Material kann beim Verfahren der Erfindung unmittelbar eingesetzt werden. Sofern der Wassergehalt, z. B. wenn der Klärschlamm ohne Witterungsschutz der Einwirkung von Niederschlägen ausgesetzt war, höher liegt, ist eine vorherige Teiltrocknung auf $\leq$ 80 % vorteilhaft, wobei Wassergehalte von 50 - 60 % vorzugsweise 50 - 55 % bevorzugt sind. Es besteht auch die Möglichkeit, durch Zugabe von Tonmehlen eine Teilabtrocknung zu erzielen. Geringere Wassergehalte sind weniger problematisch, da beim Vermischen des Schlammes mit den Zuschlagstoffen Wasser jederzeit zugeführt werden kann.

Der Wassergehalt der bei der Gewässerentschlammung anfallenden teilgetrockneten Schlämme liegt üblicherweise bei 50 - 70 Gewichtsprozent bezogen auf Schlammtrockenstoffe. Dieses Material kann beim Verfahren der Erfindung unmittelbar eingesetzt werden. Sofern der Wassergehalt, z. B. wenn der Gewässerschlamm ohne Witterungsschutz der Einwirkung von Niederschlägen ausgesetzt war, höher liegt, ist eine vorherige Teiltrocknung auf $\leq$ 70 % vorteilhaft, wobei Wassergehalte von 50 - 60 %, vorzugsweise 50 - 55 % bevorzugt sind. Es besteht auch die Möglichkeit, durch Zugabe von Tonmehlen eine Teilabtrocknung zu erzielen. Geringere Wassergehalte sind weniger problematisch, da beim Vermischen des Schlammes mit den Zuschlagstoffen Wasser jederzeit zugeführt werden kann.

Beim Verfahren der Erfindung finden wasseraufnahmefähige Zuschlagstoffe Verwendung, die infolge ihrer Porigkeit das Wasser des Schlammes aufnehmen. Da der Wassergehalt der zu beseitigenden Schlämme meist an der oberen Grenze liegt, werden erfindungsgemäß bevorzugt getrocknete Zuschlagstoffe verwendet, die ein höheres Wasseraufnahmevermögen besitzen und somit abtrocknend auf den Klärschlamm wirken. Erfindungsgemäß finden kornbeständige Zuschlagstoffe Verwendung, bei denen also unter der Einwirkung von Feuchtigkeit oder chemischen Reaktionen die Kornabmessungen erhalten bleiben.

In einer weiteren bevorzugten Ausführungsform wird als Zuschlagstoff gebrochenes, hochscherfestes Material verwendet, was die Standfestigkeit des erhaltenen Gemisches gegenüber der Verwendung von rundkörnigem Material wesentlich erhöht.

Beispiele für bevorzugte Zuschlagstoffe, auch unter dem Gesichtspunkt der Kosten, sind Recycling-Sande, z. B. Bauschutt, Ziegel oder Beton, gesinterte Kraftwerksaschen, gemahlene Hochofenschlacken und je nach Gehaltsstoffen Müllverbrennungsaschen. Bei Müllverbrennungsaschen sind im einzelnen gesonderte Versuche jeweils auf die Eignung durchzuführen. Die Körnung der Zuschlagstoffe beträgt vorzugsweise 0 bis 6 mm bzw. 0 bis 8 mm. Sie richtet sich auch nach der Dicke der einzelnen Dichtungslagen. Bei Schichtdicken von < 25 cm ist die Körnung vorzugsweise 0/8 mm, bei Schichtdicken > 25 kann auch Überkorn bis Körnung 16 mm verwendet werden.

Weitere geeignete Zuschlagstoffe sind Lavasande und Kalksteinsande, aber auch Filterstäube, da sie rücktrocknend wirken. Durch die hohe Güte der Dichtung ist ein Schadstoffaustrag weitgehendst ausgeschlossen. Ein dichtes Schlamm-Filterstäubegemisch ist auch für Ablagerungen in Monodeponien aufgrund der hohen Belastung der Filterstäube möglich. Die Verminderung der Eluierbarkeit verbessert die Deponieklasse.

Die Menge der Zuschlagstoffe beträgt 30 - 70 Gewichtsprozent, bezogen auf Schlammtrockengewicht. Die Menge der Zuschlagstoffe hängt auch vom Wassergehalt der Zuschlagstoffe selbst ab. Bei Verwendung getrockneter Zuschlagstoffe werden diese vorzugsweise in einer Menge von 40 - 60 %, vorzugsweise 45 - 55 %, jeweils bezogen auf Schlammtrockengewicht der Mischung verwendet.

Wenn die Anforderungen an die Wasserdurchlässigkeitsbeiwerte der zu errichtenden Deponie nicht allzu hoch sind, ist es ausreichend, wenn Klär- oder Gewässerschlamm und Zuschlagstoffe durch Einsatz geeigneter Maschinen direkt auf dem Boden vermischt werden. Bei höheren Anforderungen an die Wasserdichtigkeit reicht diese Methode jedoch nicht mehr aus. Vielmehr ist es dann erforderlich, das Vermischen des Gewässerschlammes mit den Zuschlagstoffen in einer Mischeinrichtung, z. B. einem Zwangsmischer so durchzuführen, daß ein optisch homogenes Gemisch entsteht.

Vorzugsweise erfolgt das Vermischen des Klär- oder Gewässerschlammes mit den Zuschlagstoffen in einer Mischeinrichtung, z. B. einem Zwangsmischer derartig, daß ein optisch homogenes Gemisch entsteht.

Die mechanische Verdichtung erfolgt vorzugsweise durch statisches Abwalzen von lageweisen aufgebrachten Schichten in Schichtlagen von 20 - 25 cm. Hierbei wird vorzugsweise bis zur Erzielung einer Proctordichte von 94 % verdichtet. Hierbei werden erfindungsgemäß Durchlässigkeitsbeiwerte von $k = 4 \times 10^{-9}$ bis $5 \times 10^{-10}$ m/s erzielt.

In einer bevorzugten Ausführungsform wird eine zusätzliche Abdichtungswirkung dadurch erreicht, daß man dem Gemisch aus Klärschlamm und Zuschlagstoffen Tonmehlen bis 10 % oder pulverförmiges Wasserglas in einer Menge bis zu 2 Gew.-%, vorzugsweise 1 - 2 Gewichtsprozent, jeweils bezogen auf das Trockengewicht des Gemisches zumischt. Ein handelsübliches pulverförmiges Wasserglas ist unter der Bezeichnung Deposil N erhältlich.

In einer weiteren bevorzugten Ausführungsform finden zusätzlich zu Wasserglas Weichgelbildner, vorzugsweise auf Basis von Natriumaluminat (Na A1 $O_2$ bzw. ($Na_2$ $Al_2$ $O_4$, n x NaOH) o,5 aq.) Verwendung, ggf. auch Aluminiumoxid. Diese Weichgelbildner werden vorzugsweise in Mengen von 0,5 - 1 Gewichtsprozent, bezogen auf das Trockengewicht des Gemisches verwendet.

Es besteht auch die Möglichkeit, den Schlamm zusätzlich mit den üblicherweise verwendeten Ein- und Zweiphasen-Dichtwandmassen wie sie z. B. beim Herstellen von vertikalen Dichtwänden verwendet werden, für den gewünschten Abdichtungseffekt einzusetzen. Beispiele für handelsübliche Einphasen-Dichtwandmassen sind DYNAGROUT® DWR-C oder nach Dynamit Nobel (Silane). Beispiele für andelsübliche Zweiphasen-Dichtwandmassen sind DYNAGROUT® DWR-A und DWR-B.

Durch Versuche wurde festgestellt, daß flüssige Gelbildner zu Wasserglas vorzugsweise im Verhältnis 1 : 3 bis 1 : 5 zugegeben werden. Durch die flüssige Einarbeitung in den Schlamm entsteht eine weiche, plastische Masse, die nicht mehr verdichtungsfähig ist. Deshalb wurde das Wasserglas zunächst in trockener Form eingemischt. Nach ca. 24 Stunden löst sich das Wasserglas in der zur Verfügung stehenden wässrigen Phase. Erst danach können die Weichgelbildner durch einen weiteren Verarbeitungsvorgang eingemischt werden.

Grundsätzliche Voraussetzungen für einen gewünschten Abdichtungseffekt sind die vorab beschriebenen Stabilisierungsmaßnahmen. Es wurden mit dieser Verarbeitungsmethode ebenfalls k-Werte von $5 \times 10^{-10}$ bis $3 \times 10^{-11}$ m/s gemessen. Solche Schichten behalten ihre weiche bis plastische Form und sind schwerer verarbeitbar.

Durch Einmischen von Wasserglas mit Weichgelbildnern wurden Durchlässigkeitsbeiwerte nach intensiver Durchmischung und Verdichtung sowie einer Standzeit von 5 Tagen von 1 bis $5 \times 10^{-10}$ m/s gemessen. Bei längerer Standzeit werden die Anfangswerte auf $k = \leq 10^{-10}$ m/s verbessert.

Ein weiterer Vorteil der Verwendung von Wasserglas besteht darin, daß die in Klärschlämmen und Gewässerschlämmen häufig enthaltenen Schwermetallionen von der gebildeten Kieselsäure gebunden werden, wobei die Bindungswirkung auch von der . Zugabemenge abhängt. Es wurde deshalb auch mit größeren Wasserglasmengen gearbeitet, als für die Abdichtung erforderlich war, ohne daß hierbei die Verdichtbarkeit und die Dichtigkeit der fertigen Schicht verloren gingen.

Des weiteren kann durch die Zugabe von Stoffen, die über oberflächenchemische Reaktionen die Schwermetalle binden, die gewünschte Immobilisierung erreicht werden, ohne daß der Abdichtungseffekt hierdurch negativ beeinflußt wird.

Beispiele für oberflächenchemische Reaktionen sind elektrostatische Wechselwirkungen, wie $Si-O^-$ $M^+$ (M = Schwermetallion) oder elektrostatische Wechselwirkungen mit hohem chemischen Bindungsanteil $Si-S^-$ $M^+$. Eine Immobilisierung wurde weiterhin durch Einlagerung zeolithischer Verbindungen erreicht.

Das Verfahren der Erfindung ermöglicht bei genauer Dosierung, je nach Zusammensetzung des Klärschlammes, mineralische Abdichtungen herzustellen, die den Ansprüchen der Zulassungsbehörden entsprechen. Weiterhin ist das Verfahren bevorzugt dafür geeignet, fertige Deponieschüttungen zusätzlich mit einer Oberflächenabdichtung zu versehen, um Niederschlagswasser nicht in die Deponieschüttung gelangen zu lassen. Auch Altlasten werden häufig, wenn es der Gehalt der Schadstoffe zuläßt, zur Sanierung an der Oberfläche lediglich mit einer mineralischen Abdichtung versehen, um eine weitere Auswaschung der Schadstoffe auszuschließen. In allen genannten Fällen ist das Verfahren der Erfindung anwendbar, wobei gleichzeitig eine Entsorgung der unerwünschten Abfallprodukte Klärschlamm und Gewässerschlamm stattfindet.

Ein weiterer Vorteil besteht hierbei darin, daß die im Klärschlamm enthaltenen Sand- und Feinkiesbestandteile nicht entfernt werden müssen, wie dies bei der herkömmlichen Klärschlammentsorgung der Fall ist.

Es ist zwar bereits bekannt, Gewässerschlamm durch Zugabe von Kalk so abzutrocknen, daß er wie ein nasser Lehm stichfest und bedingt bearbeitbar ist. Mit Kalk läßt sich aber keine brauchbare Abdichtung erreichen, wie durch eigene Laborversuche gezeigt werden konnte. Darüber hinaus besitzt das Verfahren der Erfindung in der bevorzugten Ausführungsform unter Verwendung von Wasserglas einen weiteren wichtigen Vorteil. Im Gewässerschlamm enthaltene organische Stoffe werden so fest eingeschlossen, daß sie nicht mehr verrotten, so daß keine Beeinträchtigung der Abdichtungswirkung durch die Verrottung organischer Stoffe zu befürchten ist. Deshalb besteht auch die Möglichkeit, das Abdichtungsverfahren für Auffangbecken mit Dauerwasserspiegel zu verwenden.

**Patentansprüche**

1. Verfahren zum Abdichten von Bodenformationen, insbesondere zur Basisabdichtung von Deponien oder Abkapselung von Altlasten oder Deponien nach dem Prinzip natürlichen Abdichtungs böden, wie Lehm oder Ton, unter Verwendung von Schlamm, **dadurch gekennzeichnet**, daß man Klärschlamm oder Gewässerschlamm mit 30 - 70 Gewichtsprozent, bezogen auf Schlammtrockengewicht, wasseraufnahmefähigen, kornbeständigen Zuschlagstoff vermischt, das erhaltene Gemisch auf die Bodenformation aufbringt und mechanisch verdichtet.

2. Verfahren nach Anspruch 1, dadurch gekennzeichnet, daß man getrockneten Zuschlagstoff verwendet.

3. Verfahren nach Anspruch 1 oder 2, dadurch gekennzeichnet, daß man gebrochenen, hochscherfesten Zuschlagstoff verwendet.

4. Verfahren nach einem der Ansprüche 1 - 3, dadurch gekennzeichnet, daß man als Zuschlagstoff Recycling-Sand, Kraftwerksasche, Müllverbrennungsasche oder gemahlene Hochofenschlacke verwendet.

5. Verfahren nach einem der Ansprüche 1 - 4, dadurch gekennzeichnet, daß man die Herstellung des Gemisches aus Klärschlamm oder Gewässerschlamm und Zuschlagstoff in einem Zwangsmischer bis zur Homogenität durchführt.

6. Verfahren nach einem der Ansprüche 1 - 5, dadurch gekennzeichnet, daß man die mechanische Verdichtung durch statisches Abwalzen der lagenweise aufgebrachten Schichten in Schichtlagen von 20 - 25 cm durchführt.

7. Verfahren nach Anspruch 6, dadurch gekennzeichnet, daß man die Verdichtung bis zu einer Proctordichte von 94 % durchführt.

8. Verfahren nach einem der Ansprüche 1 - 7, dadurch gekennzeichnet, daß man zusätzlich pulverförmiges Wasserglas in einer Menge von 1 - 2 Gewichtsprozent bezogen auf das Trockengewicht des Gemisches verwendet.

9. Verfahren nach Anspruch 8, dadurch gekennzeichnet, daß man zusätzlich Weichgelbildner in einer Menge von 0,5 - 1 Gewichtsprozent bezogen auf das Trockengewicht des Gemisches verwendet.

10. Verfahren nach Anspruch 9, dadurch gekennzeichnet, daß man als Weichgelbildner Natriumaluminat verwendet.

11. Verfahren nach einem der Ansprüche 8 bis 10, dadurch gekennzeichnet, daß man das Wasserglas zunächst in trockener Form einmischt und erst nach Auflösung des Wasserglases die Weichgelbildner durch einen weiteren Verarbeitungsvorgang einmischt.

12. Verfahren nach einem der vorhergehenden Ansprüche, dadurch gekennzeichnet, daß man Zuschlagsstoff mit einer Körnung 0 - 6 mm oder 0 - 8 mm einsetzt.

**Claims**

1. A process for sealing soil formations, especially for sealing the base of a waste dump or for encapsulating old sources of pollution or waste dumps, in accordance with the principle of natural sealing soils, such as loam or clay, wherein sludge is used, characterized in that sewage sludge or river mud is mixed with 30 to 70 wt%, based on sludge/mud dry weight, water absorbent aggregate having a stable grain, and the resultant mixture is applied to the soil formation and mechanically compacted.

2. The process of claim 1, characterized in that dried aggregate is used.

3. The process of claim 1 or 2, characterized in that crushed aggregate with a high shear strength is used.

4. The process of any of claims 1 to 3, characterized in that recycled sand, power plant ash, refuse incineration ash, or ground blast furnace slag is used as the aggregate.

5. The process of any of claims 1 to 4, characterized in that the mixing of sewage sludge or river mud, and aggregate is carried out by forced mixing until homogeneity.

6. The process of any of claims 1 to 5, characterized in that the mechanical compaction is performed by static rolling of the layers, applied layer by layer, in a thickness of 20 to 25 cm.

7. The process of claim 6, characterized in that the layers are compacted to a proctor density of 94%.

8. The process of any of claims 1 to 7, characterized in that powdered water glass is also added in an amount of 1 to 2 wt%, based on the dry weight of the mixture.

9. The process of claim 8, characterized in that soft gel-forming agents are also added in an amount from 0.5 to 1 wt%, based on the dry weight of the mixture.

10. The process of claim 9, characterized in that sodium aluminate is used as said soft gel-forming agent.

11. The process of any of claims 8 to 10, characterized in that said water glass is admixed in dry form, and it is only after dissolution of said water glass that said soft gel-forming agents are admixed in a further processing step.

12. The process of any of the preceding claims, characterized in that aggregate having a grain size 0 to 6 mm or 0 to 8 mm is used.

**Revendications**

1. Procédé pour étancher des couches de sol, en particulier pour l'étanchement de base de décharges ou pour le recouvrement de surface de dépôt de déchets ou de décharges selon le principe de sols d'étanchement naturels, comme la terre glaise ou l'argile, en utilisant de la boue, **caractérisé** en ce que l'on mélange de l'écume de défécation ou de la vase avec 30 à 70 % en poids, concernant le poids de la boue à l'état sec, avec des agrégats pouvant absorber de l'eau et étant stables sous forme de grains, et en ce que l'on dépose le mélange obtenu sur la couche de sol et en ce que on le compacte mécaniquement.

2. Procédé selon la revendication 1, caractérisé en ce l'on utilise des agrégats secs.

3. Procédé selon la revendication 1 ou 2, caractérisé en ce que l'on utilise des agrégats broyés ayant une haute résistance au cisaillement.

4. Procédé selon l'une des revendications 1 à 3, caractérisé en ce que l'on utilise du sable de recyclage, des cendres de centrales génératrices, des cendres d'incinération d'ordures ou du laitier de haut fourneau moulu comme agrégat.

5. Procédé selon l'une des revendications 1 à 4, caractérisé en ce que l'on exécute la fabrication du mélange d'écume de défécation ou de vase et de l'agrégat en un malaxeur à mélange forcé jusqu'à homogénéité.

6. Procédé selon l'une des revendications 1 à 5, caractérisé en ce que l'on exécute le compactage mécanique par un aplanissement statique des couches déposées en couches consécutives en couches de 20 à 25 cm.

7. Procédé selon la revendication 6, caractérisé en ce que l'on exécute le compactage jusqu'à une densité Proctor de 94 %.

8. Procédé selon l'une des revendications 1 à 7, caractérisé en ce que l'on utilise en plus de l'eau soluble sous forme de poudre en une quantité de 1 à 2 % en poids, concernant le poids à l'état sec du mélange.

9. Procédé selon la revendication 8, caractérisé en ce que l'on utilise en plus un gélifiant mou en une quantité de 0,5 à 1 % en poids, concernant le poids à l'état sec du mélange.

10. Procédé selon la revendication 9, caractérisé en ce que l'on utilise de l'aluminate de sodium comme gélifiant mou.

11. Procédé selon l'une des revendications 8 à 10, caractérisé en ce que on ajoute d'abord l'eau soluble à l'état sec et on n'ajoute le gélifiant mou par une opération de traitement supplémentaire qu'après la dissolution de l'eau soluble.

12. Procédé selon l'une des revendications précédentes, caractérisé en ce que l'on utilise un agrégat ayant une granulation de 0 à 6 mm ou de 0 à 8 mm.